# EUROPEAN PATENT APPLICATION

(11) **EP 1 978 268 A1**
(43) Date of publication of application: **08.10.2008**
(21) Application number: 06781526.6
(22) Date of filing: 25.07.2006
(51) Int. Cl.: F16C 29/06, B24C 1/10, C21D 7/06, F16C 19/36, F16C 33/64

(54) **PROCESS FOR PRODUCING MOTION GUIDE APPARATUS AND MOTION GUIDE APPARATUS PRODUCED BY THE PROCESS**

(30) Priority: 27.07.2005 JP 2005217622
(71) Applicant: THK CO., LTD., Shinagawa-ku, Tokyo 141-0031 (JP)
(72) Inventor: MICHIOKA, Hidekazu, c/o THK Co., Ltd., Tokyo 141-0031 (JP); ISE, Genjiro, c/o THK Co., Ltd., Tokyo 141-0031 (JP)
(74) Representative: Weigelt, Udo
(86) International application number: PCT/JP2006/314614
(87) International publication number: WO 2007/013422

(57) **Abstract**

There is performed a treatment including a grinding working step of grinding at least a portion of a rolling surface and a sliding surface of a motion guide device using a rolling member by a grinding working using a grinding stone, and a surface treating step of effecting a peening treatment to a friction surface formed by the grinding working to render a defect on the friction surface caused by the grinding working harmless. By manufacturing a motion guide device through such treating steps, a defect such as flaw generated on the friction surface is made harmless, the fatigue strength, sliding performance and lifetime of the device can be improved. Even in a travelling distance test, a travelling distance largely over a calculated lifetime could be achieved. Accordingly, even if a flaw is generated on the friction surface or rolling surface by the grinding working using a grinding stone, the flaw can be made harmless without giving influence to an allowable dimensional accuracy of a member to be treated.

## Description

### TECHNICAL FIELD

The present invention relates to a method of manufacturing a motion guide device and also to a motion guide device manufactured by using this manufacturing method, and more particularly, to a method of manufacturing a motion guide device and also to a motion guide device manufactured by using this manufacturing method employing a technology for substantially rendering a defect on a friction surface (this is a term including a rolling surface of a rolling member) generated at a time of working harmless.

### BACKGROUND ART

In a conventional motion guide device, such as linear guide, linear guide device, ball spline device, ball screw device or the like, utilizing rolling members, because members constituting such devices are subjected to repeated rolling/sliding pressure through the rolling members, it has been required for the friction surface of the rolling member to have high surface quality or accuracy.

Although such friction surface is generally worked through a grinding working using a grinding stone, in the grinding working using the grinding stone, there is a fear such that the grinding grain falling down from the grinding stone during the grinding working bits the friction surface, which may generate flaws thereon. The flaws on the friction surface remarkably influences on a lifetime of the motion guide device, and it is hence not desirable that the flaws remain on the friction surface as it is.

Incidentally, since the friction surface forms a rolling passage of the rolling member, it is obliged for the friction surface to maintain allowable dimensional accuracy formed by the grinding working. Accordingly, in the conventional technology, when the flaw is once generated on the friction surface, it is difficult to remove the flaw while maintaining the allowable dimensional accuracy of the friction surface. Accordingly, in the conventional technology, if a defect such as flaw was caused to a member, it was obliged for the member to be disposal.

Patent Publication 1: Japanese Unexamined Patent Application Publication No. 05-078859

### DISCLOSURE OF THE INVENTION

### PROBLEMS TO BE SOLVED BY THE INVENTION

As a technology for modifying a metal surface while maintaining allowable dimensional accuracy of the friction surface to a certain extent, there is known a treating technology such as shot peening or hard shot peening. These treating technologies are effective for the improvement in fatigue strength, so that the treating technologies are utilized for the surface modification of constitutional parts such as gears or springs (for example, refer to the Patent Publication 1).

However, the conventional surface modifying technology represented by the shot peening or hard shot peening technology is a method developed for the purpose of changing or controlling nature of the metal surface and not a method of removing a flaw formed on the friction surface (for example, a flow having several or several tens µ m due to biting of the grinding grain).

The present invention was made in consideration of the above circumstances and an object thereof is to provide a new peening treating technology capable of rendering a flaw formed on a friction surface or rolling surface through a grinding working using a grinding stone harmless under a condition of maintaining an allowable dimensional accuracy of the friction surface or rolling surface. Another object of the present invention is to also provide a new peening treatment technology capable of improving a fatigue strength and a sliding performance in addition to improvement in lifetime of a device, as well as capable of rendering the flaw on the friction surface or rolling surface harmless, thereby achieving an effect which has not been attained in the conventional technology.

### MEANS FOR SOLVING THE BLOBLEMS

A method of manufacturing a motion guide device according to the present invention is characterized by performing a treatment including a grinding working step of grinding at least a portion of a rolling surface and a sliding surface of a motion guide device using a rolling member by a grinding working using a grinding stone; and a surface treating step of effecting a peening treatment to a friction surface formed by the grinding working to render a defect on the friction surface caused by the grinding working harmless.

Another method of manufacturing a motion guide device according to the present invention is a method of manufacturing a motion guide device including: a track member provided with a rolling member rolling surface; a movable member provided with a loaded rolling member rolling surface opposing to the rolling member rolling surface; and a plurality of rolling members disposed to be freely rollable in a loaded rolling passage constituted by the rolling member rolling surface and the loaded rolling member rolling surface, in which the movable member is reciprocally movable or rotatable in an axial direction or circumferential direction of the track member, and the manufacturing method is characterized by performing a treatment including a grinding working step effected to the movable member so as to form the loaded rolling member rolling surface by using a grinding stone; and a surface treating step of effecting a peening treatment to an area including at least loaded rolling member rolling surface of the movable member to thereby render a defect caused on the loaded rolling member rolling surface in the grinding working harmless.

In the manufacturing method of the motion guide device according to the present invention, the loaded rolling member rolling surface may be subjected to the peening treatment in the surface treating step so as to provide a surface roughness Ra of less than 0.4 µm.

In the manufacturing method of the motion guide device according to the present invention, the peening treatment may be a fine-grain peening treatment.

In the manufacturing method of the motion guide device according to the present invention, the surface treating step may include a barrel treatment to be effected after the peening treatment.

A motion guide device manufactured by the method mentioned above includes: a track member provided with a rolling member rolling surface; a movable member provided with a loaded rolling member rolling surface opposing to the rolling member rolling surface; and a plurality of rolling members disposed to be freely rollable in a loaded rolling passage constituted by the rolling member rolling surface and the loaded rolling member rolling surface, in which the movable member is reciprocally movable or rotatable in an axial direction or circumferential direction of the track member, and in the motion guide device, at least a portion of the rolling member rolling surface and the loaded rolling member rolling surface is subjected to the peening treatment in the surface treating step so as to provide a surface roughness Ra of less than 0.4 µm.

It is further to be noted that the above aspect of the present invention does not include all the necessary characteristic features and sub-combination of these characteristic features can also constitute the present invention.

### EFFECTS OF THE INVENTION

According to the present invention, even if a flaw is generated on a friction surface or rolling surface by a grinding working using a grinding stone, there is provided a new peening treatment technology capable of rendering the flaw harmless without giving influence to an allowable dimensional accuracy of a member to be treated. In addition, according to this peening treatment technology, not only the flaw on the friction surface of the rolling surface is made harmless, but also fatigue strength and sliding performance can be improved, in addition to improvement in lifetime of a device.

### BRIEF DESCRIPTION OF THE DRAWINGS

Fig. 1A is a perspective view showing one example of a linear guide device manufactured by a method of manufacturing a motion guide device according to the present invention.
Fig. 1B is a sectional view for explaining an endless circulation passage provided for the linear guide device shown in Fig. 1A.
Fig. 2 is a graph representing a result of traveling distance test of the linear guide device subjected to treatment under respective test (experiment) conditions shown in Table 1.
Fig. 3 is a graph representing a surface roughness Ra before and after a fine-grain peening treatment every time of the test conditions shown in the Table 1.
Fig. 4 is a perspective view showing one example of a spline device manufactured by a method of manufacturing a motion guide device according to the present invention.
Fig. 5A is a perspective view, partially in section, showing one example of a motion guide device, as a rotary bearing device, according to the present invention.
Fig. 5B is an illustration of a vertical section of the rotary bearing device shown in Fig. 5A.

### REFERENCE NUMERALS

40 --- linear guide device, 41 --- track rail, 41a --- rolling member rolling surface, 42, 62 --- ball, 43 --- movable block, 43aloaded rolling member rolling surface, 52 --- loaded rolling passage, 53 --- non-loaded rolling passage, 55 --- direction changing passage, 60spline device, 61 --- spline shaft, 61a --- rolling member rolling surface, 63 --- outer sleeve, 64 --- retainer, 70 --- rotary bearing device, 71inner race, 72 --- inner track surface, 73 --- outer race, 74 --- outer track surface, 75 --- track passage, 77 --- roller

### BEST MODE FOR EMBODYING THE INVENTION

Hereunder, a preferred embodiment for embodying the present invention will be described with reference to the accompanying drawings. Further, it is to be noted that the following embodiment is not one defining the invention of each claim, and all the combination of characteristic features mentioned in the embodiment is not necessarily essential for achieving the objects of the present invention.

It is to be noted that "a motion guide device" in these papers includes devices accompanying every rolling/sliding motion such as in all roller bearings used for machine tools, non-lubricating bearings used at a vacuum condition, linear guides, linear guide devices, ball spline devices, ball screw devices, roller screw devices, cross roller devices and the like.

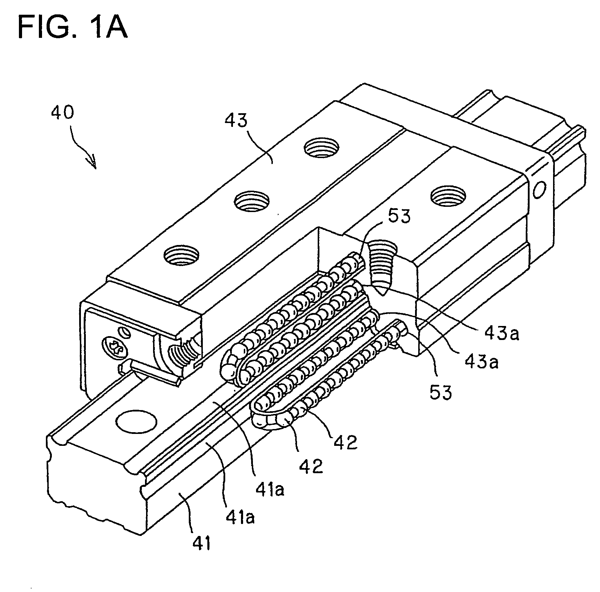

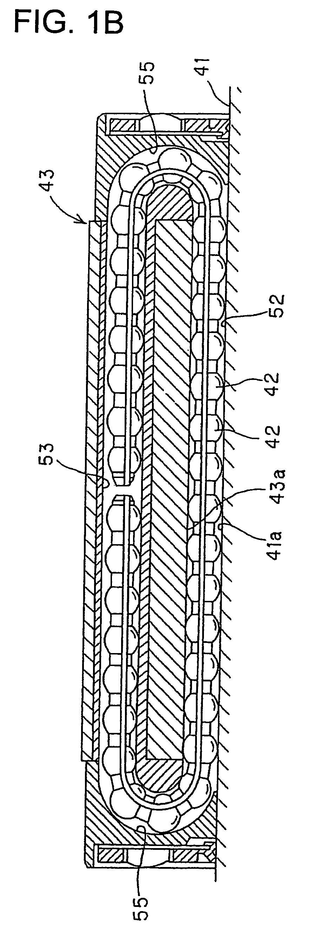

The method of manufacturing a motion guide device according to the present embodiment is applicable to the motion guide device constructed as a linear guide device shown in Figs. 1A and 1B. Herein, Fig. 1A is a perspective view showing one example of a linear guide device manufactured by a method of manufacturing a motion guide device according to the present invention, and Fig. 1B is a sectional view for explaining an endless circulation passage provided for the linear guide device shown in Fig. 1A.

A configuration of a linear guide device 40 shown in Figs. 1A and 1B will be first explained hereunder. The linear guide device 40 as a motion guide device according to the present invention is provided with a track rail 41 as a track member and a movable block 43 as a movable member mounted to the track rail 41 to be slidable through a number of balls 42, 42 ---, 42 as rolling members arranged in the track rail 41.

The track rail 41 is a long scale member having a rectangular shape in section perpendicular to the longitudinal direction of the track rail 41, and rolling member rolling surfaces 41a, --- are formed on the surfaces (upper and both side surfaces) of the track rail 41 along the entire longitudinal direction thereof as tracks on which the balls roll.

The track rail 41 may be formed so as to extend linearly or to describe a curve. In the illustrated embodiment, lateral two threads, totally, four threads, of the rolling member rolling surfaces are formed, but the number of threads may be changed in accordance with use of the linear guide device.

On the other hand, the movable block 43 is formed with a plurality of loaded rolling member rolling passages 43a, --- formed at positions corresponding to the rolling member rolling surfaces 41a, ---. The rolling member rolling surfaces 41 a, --- of the track rail 41 and the loaded rolling member rolling surfaces 43a, --- of the movable block 43 constitute, in combination, loaded rolling passages 52, --- with a plurality balls 42 interposed therebetween. In addition, the movable block 43 is also formed with four threads of non-loaded rolling passages 53, --- extending in parallel with the respective rolling member rolling surfaces 41a, ---, and direction changing passages 55, --- each connecting the non-loaded rolling passage 53 and the loaded rolling passage 52. One endless circulation passage is formed, as shown in Fig. 1B, in combination, by one loaded rolling passage 52 and one non-loaded rolling passage 53 and a pair of direction changing passages 55 connecting both the passages 52 and 53 at both ends thereof.

A plurality of balls 42, --- are disposed in the endless circulation passage, so as to endlessly circulate therein, formed by the loaded rolling passage 52, the non-loaded rolling passage 53 and a pair of direction changing passages 55, 55, whereby the movable block 43 carries out a relatively reciprocal motion with respect to the track rail 41.

The linear guide device 40 according to the present embodiment of the structure mentioned above has a characteristic feature such that at least a part of the rolling surface of the rolling member rolling surface 41a, --- and the loaded rolling member rolling surface 43a, --- is subjected to the fine-grain peening treatment in a manner such that the surface roughness Ra of the rolling surface subjected to the peening treatment is less than 4 µm.

In the method of manufacturing the linear guide device 40 of the present embodiment including this fine-grain peening treatment, first, a friction surface to which the rolling member contacts is formed to a member constituting the linear guide device 40 by the grinding working using the grinding stone (grinding working step). Further, this friction surface corresponds to a rolling surface such as the rolling member rolling surface 41a of the track rail 41 or the loaded rolling member rolling surface 43a of the movable block 43 in the linear guide device 40 shown in Figs. 1A and 1B.

Next, the friction surface formed in the grinding working step is effected with the fine-particle peening treatment (surface treating step). In this step, as a device for carrying out this fine-grain peening treatment, a blaster device using in a conventional shot peening or hard shot peening process may be utilized, and very fine-grains each having grain diameter of about 40-80 µm are blasted to a member forming the track rail 40 or movable block 43 with treating conditions specific for the present invention, which will be mentioned hereinafter. Further, it may be necessary that an area which is subjected to the fine-grain peening treatment includes at least the friction surface, and the fine-grain peening treatment may be done with respect to the entire track rail 41 and the movable block 43. The execution of such fine-grain peening treatment may attain an effect to render grain biting flaw, which may be generated in the grinding working step, harmless.

Herein, the following matters may be considered as to a mechanism for rendering the grain biting flaw generated on the friction surface harmless by the fine-grain peening treatment, such that by the blasting of the very fine-grain shot of about 40-80 µm, (1) a harmful portion (protruded portion) of the flaw is blasted, (2) metal around the flaw is instantaneously fused by a heat instantaneously generated by the blasting of the fine-grain shot, and the flaw is banished by a rapid quenching thereafter, and (3) although the flaw may not be completely banished by the heat generated by the blasting of the fine-grain shot, the flaw is finely minimized and becomes harmless to an extent imparting no adverse influence to the rolling/ sliding motion of the rolling member.

Furthermore, the fine-grain peening treatment of this embodiment only carries out the blasting on the friction surface by utilizing the very fine shot of 40-80 µm, and accordingly, its dimensional change is merely several µm, and it is hence possible to satisfy the allowable dimensional accuracy required for the rolling surface such as rolling member rolling surface 41a or loaded rolling member rolling surface 43a.

In the method of manufacturing the motion guide device according to the present embodiment, it may be possible for the surface treatment step to include a barrel treatment executed after the fine-grain peening treatment. That is, the fine-grain peening treatment can render the flaw harmless under the condition of fully satisfying the allowable dimensional accuracy required for the rolling surface such as rolling member rolling surface 41a or the loaded rolling member rolling surface 43a, but it is inevitable that the surface roughness of the rolling surface after the peening treatment is slightly degraded in comparison with the surface roughness of the grinding surface. Then, it is preferred to improve the surface roughness by performing the barrel treatment to the rolling surface which was subjected to the fine-grain peening treatment.

In an actual barrel treatment, an object to be treated such as track rail 41 or movable block 43 is put into a barrel container, in which, for example, alumina powder, mica, impact media (metal ball, grinding stone piece, grinding grain, natural or architectural stone piece, quartz, sand, leather, sawdust, or like), machining liquid or the like was put, and then, the container is vibrated and the object is agitated. According to such treatment, the irregularity on the rolling surface subjected to the fine-grain peening treatment is partially removed to thereby obtain a smooth rolling surface. In addition, it may be preferred to further add a compound for further accelerating anti-corrosion function or grinding function.

Incidentally, in the method of manufacturing the motion guide device according to the present embodiment, it is not always essential to carry out the barrel treatment, and this may be determined to be carried out or not to be carried out in consideration of a use environment or product specification of the motion guide device as an object to be manufactured.

Next, the concrete conditions for carrying out the fine-grain peening treatment according to the present embodiment will be explained hereunder. That is, the inventors improved the conventional peening treatment such as conventionally known shot peening treatment or hard shot peening treatment, and found out new treating conditions for the peening treatment for rendering the defect of the generation of flaw on the friction surface harmless while maintaining the allowable dimensional accuracy, which was impossible in the conventional technology.

The following Table 1 shows test (experiment) conditions of the fine-grain peening treatment which was performed by the inventors of the subject application. In the experiment, the fine-grain shot of grain diameter of about 40-80 µm with respect to shot grain diameter of about 800 µm adopted in the conventional shot peening treatment or hard shot treatment so as to render the flaw harmless.

### Table 1

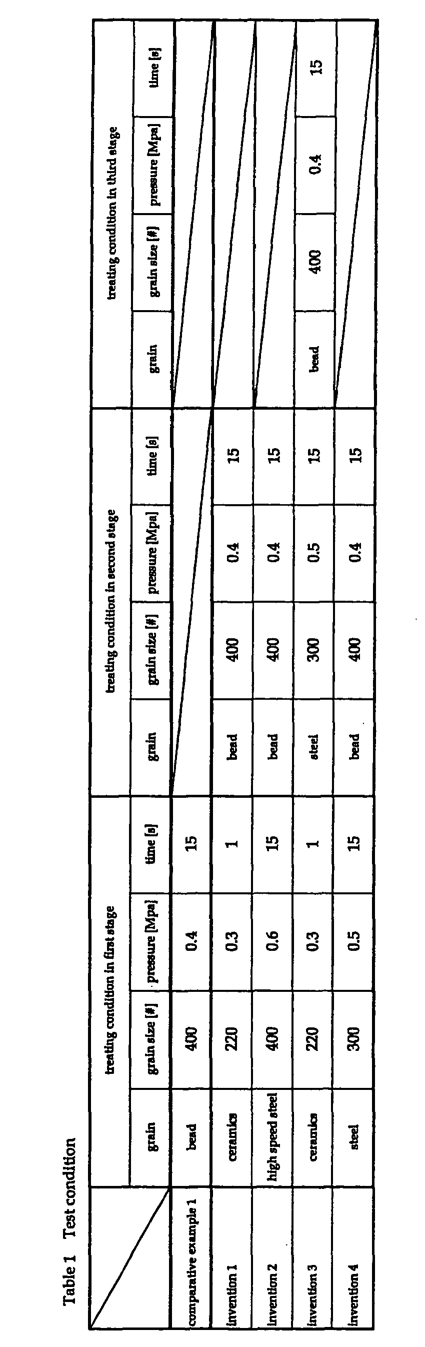

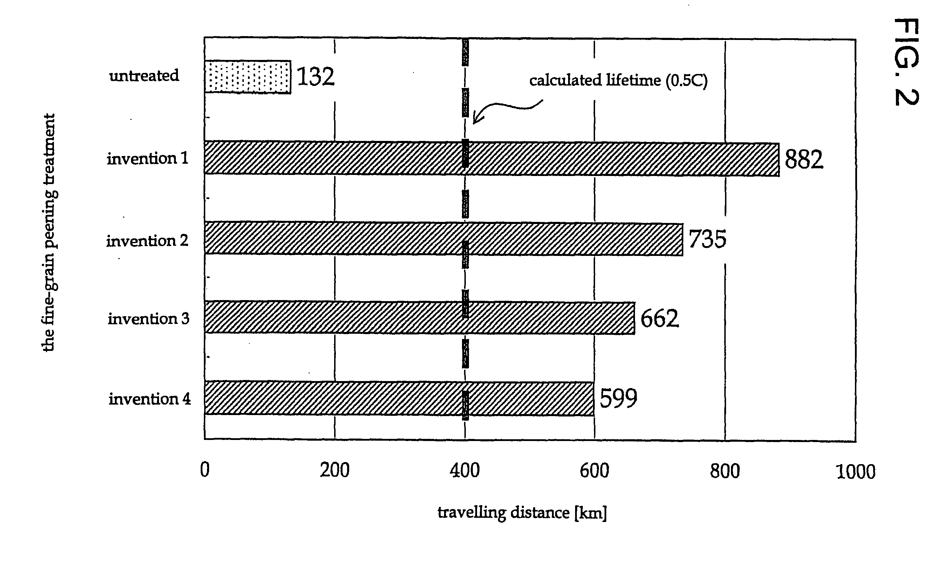

The following Table 2 shows a result of each test (experiment) conditions shown in the Table 1. Further, Fig. 2 is a view showing a result of travelling distance test of the linear guide device subjected to the treatment with the test conditions shown in the Table 1.

As is apparent from the Table 2, the flaw was made harmless except for a "comparative example 1" in which beads having viscosity #400 was blasted. Further, as specifically shown in Fig. 2, the linear guide device 40 to which the fine-grain peening treatment was effected according to the present invention provided travelling distances largely over 400km, which is a lifetime on calculation. Particularly, in the fine-grain peening treatment carried out under the condition of an "invention 1", the travelling distance of 882 km more than twice of the calculated lifetime of 400km was realized. This reveals not only that the fine-grain peening treatment according to the present invention renders the defect caused by the flaw harmless but also that the fatigue strength and sliding performance can be improved, in addition to the improvement in the lifetime of the device itself. This means that the present invention attains advantageous effects which was not realized in the prior art technology. Furthermore, it is an apparent matter that significant difference existed between the linear guide device to which the fine-grain peening treatment was not effected and the flaw remained and the linear guide device which was subjected to the fine-grain peening treatment according to the present invention.

### Table 2

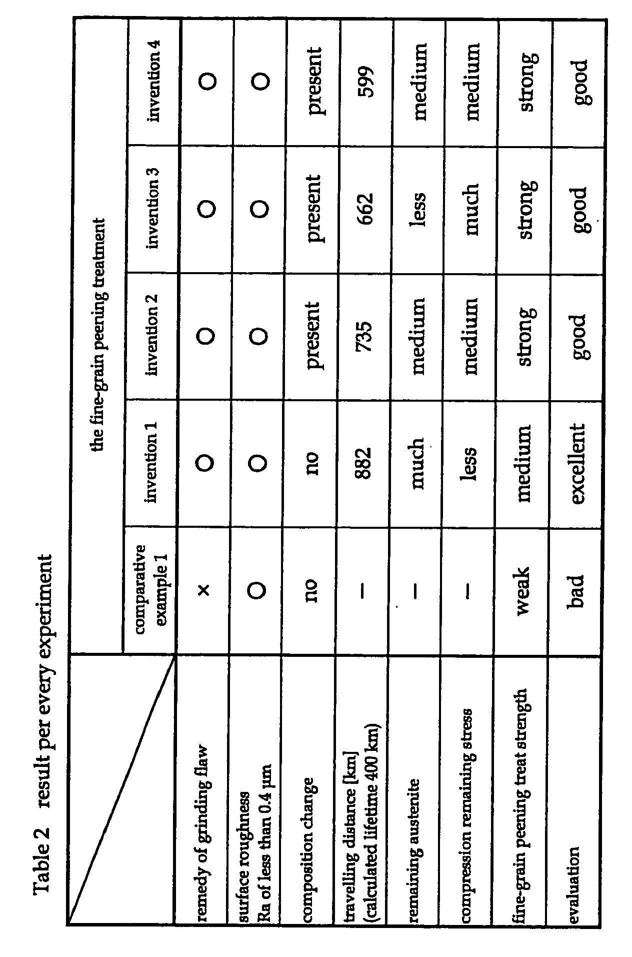

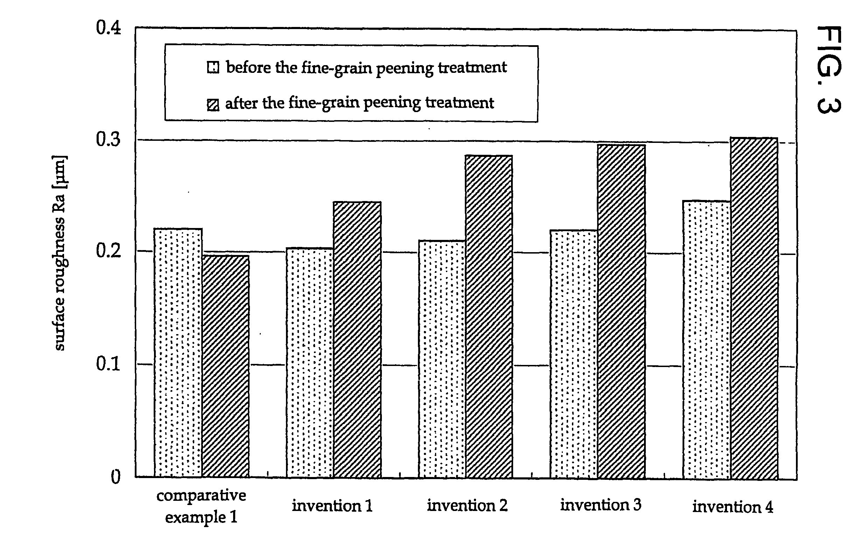

Furthermore, Fig. 3 represents the surface roughness Ra before and after the fine-grain peening treatment of each test conditions. It will be found from this Fig. 3 that the surface roughness was slightly degraded except the test condition of the "comparative example 1" in which the flaw was not removed. This means that although, in order to render the defect caused by the flaw or like harmless, a slight surface roughness is to be sacrificed, the fine-grain peening treatment according to the present invention can make a significant defect harmless by adopting a condition, including the barrel treatment, in which the surface roughness Ra of less than 0.4 µm, which is generally required for a motion guide device performing rolling/ skidding motion.

Hereinbefore, although the preferred embodiment of the present invention was described, the technical scope of the present invention is not limited to such descriptions, and many other changes and modifications may be made. That is, the treating conditions carried out in the surface treatment step in the method of manufacturing the motion guide device according to the present invention are not limited to the conditions in the present invention shown in the Table 1, but any other preferred conditions may be adopted, in which the defect such as flaw is made harmless and the surface roughness Ra of less than 0.4 µm is realized, in accordance with the performance required for metal material or motion guide devices as an object to be treated

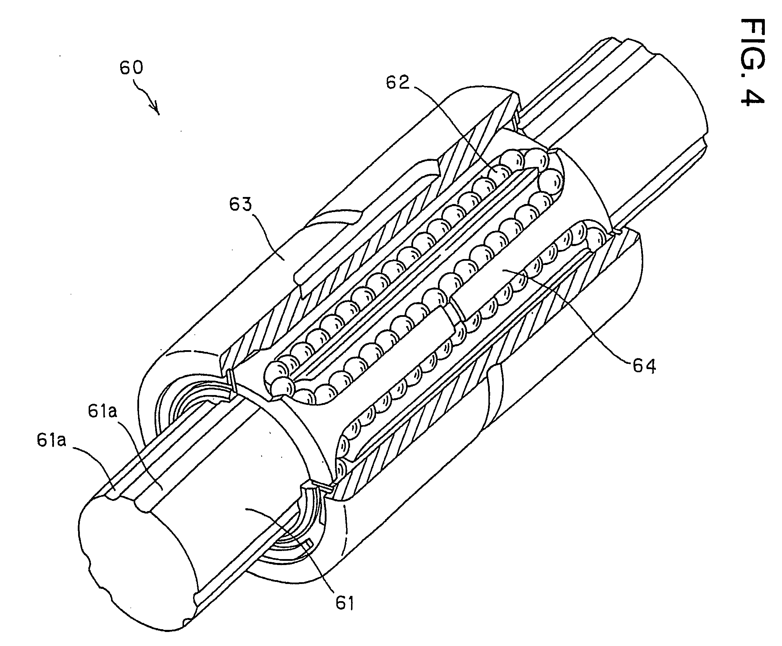

Furthermore, although in the present embodiment, there is described one example in which the motion guide device is constructed as linear guide device 40, the manufacturing method of the motion guide device of the present invention is applicable to a spline device 60 as shown in Fig. 4.

Hereunder, a structure of the spline device 60 will be briefly described. The spline device 60 is composed of a spline shaft 61 as a track member and a cylindrical outer sleeve 63 as a movable member mounted, to be movable, on the spline shaft 61 as the track member through a number of balls 62, 62, --- as rolling members. The spline shaft 63 is formed, in its surface, with rolling member rolling surfaces 61 a,extending in the axial direction of the spline shaft 61, the rolling member rolling surface being formed as a track for the balls 62. On the other hand, the outer sleeve 63 mounted to the spline shaft 61 is formed, in its surface, with a loaded rolling member rolling surfaces corresponding to the rolling member rolling surfaces 61a, ---. A plurality of projections as rows of threads are formed in the extending direction of the rolling member rolling surfaces 61a, ---. A loaded rolling passage is formed in combination of the loaded rolling member rolling surface formed in the outer sleeve 63 and the rolling member rolling surface formed in the spline shaft 61. A non-loaded return passage, along which the balls 62, --- released from being loaded are moved, is formed in adjacent to the loaded rolling passage. The outer sleeve 63 is mounted with a retainer 64 for arranging and holding the balls 62, --- in form of circuit. A plurality of balls 62,are disposed between the loaded rolling member rolling surface of the outer sleeve 63 and the rolling member rolling surface 61a of the spline shaft 61 so as to freely roll endlessly through the non-loaded rolling member return passage to thereby relatively carry out the reciprocal motion of the outer sleeve 63 with respect to the spline shaft 61.

The peening treatment according to the present invention can be effected to at least one of the rolling member rolling surface 61 and the loaded rolling member rolling surface constituting a portion of the spline device 60. By manufacturing the spline device 60 by employing the method of manufacturing the motion guide device according to the present invention, the rolling member rolling surfaces 61a, --- and the loaded rolling member rolling surfaces with no flaw can be realized, and in addition, the spline device 60 improved in the fatigue strength, sliding performance and the lifetime of the device can be provided.

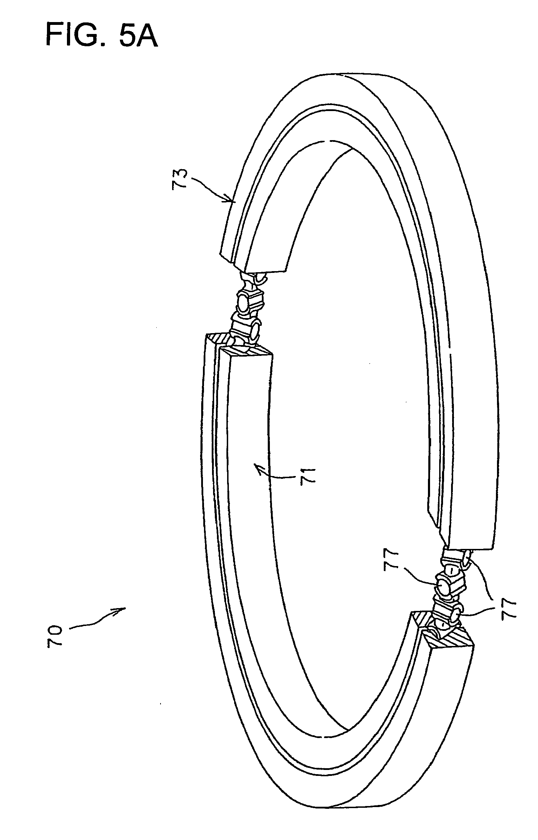

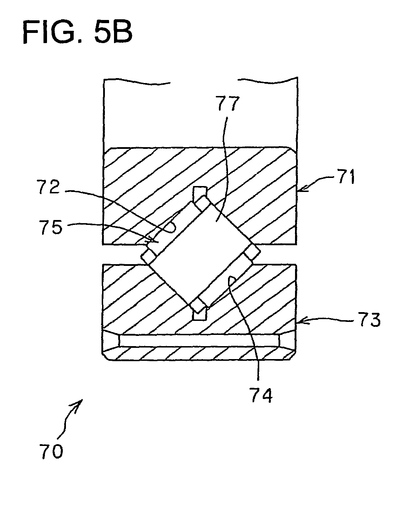

Furthermore, the motion guide device manufactured by the method of manufacturing the motion guide device of the present invention can be constructed as a rotary bearing device shown in Figs. 5A and 5B. Herein, Fig. 5A is a perspective view, partially in section, showing one example of a motion guide device, as a rotary bearing device, according to the present invention, and Fig. 5B is an illustration of a vertical section of the rotary bearing device shown in Fig. 5A.

As shown in Figs. 5A and 5B, the motion guide device constructed as the rotary bearing device 70 is provided with an inner race 71 having a V-shaped inside track surface 72 (as track member or movable member) formed in its outer peripheral surface, and a V-shaped outside track surface 74 (as movable member or track member) formed in its inner peripheral surface, and rollers 77, 77, --- as rolling members arranged in cross-shape so as to roll between the track passage in a rectangular shape formed by the inside track surface 72 and the outside track surface 74, so that the inner race 71 and the outer race 73 perform relative rotating motion in the circumferential direction thereof.

The peening treatment according to the present invention will be effected to at least one of the inside track surface 72 and the outside track surface 74 constituting the rotary bearing device 70. By manufacturing the rotary bearing device 70 by the method of manufacturing the motion guide device of the present invention, the inside track surface 72 and the outside track surface 74 having no flaw can be realized and provided, and in addition, the rotary bearing device 70 improved in fatigue strength, the sliding performance and the lifetime of the device can be provided.

Further, it is to be noted that the present invention is applicable to every motion guide device such as linear guide device, rolling bearing and the like as well as the linear guide device, the spline device and the rotary bearing device mentioned above. It is also apparent that many other modifications and changes are also within the technical scope of the present invention.

## Claims

1. A method of manufacturing a motion guide device comprising:
a grinding working step of grinding at least a portion of a rolling surface and a sliding surface of a motion guide device using a rolling member by a grinding working using a grinding stone; and
a surface treating step of effecting a peening treatment to a friction surface formed by the grinding working to render a defect on the friction surface caused by the grinding working harmless.

2. A method of manufacturing a motion guide device, the motion guide device including: a track member provided with a rolling member rolling surface; a movable member provided with a loaded rolling member rolling surface opposing to the rolling member rolling surface; and a plurality of rolling members disposed to be freely rollable in a loaded rolling passage constituted by the rolling member rolling surface and the loaded rolling member rolling surface, in which the movable member is reciprocally movable or rotatable in an axial direction or circumferential direction of the track member, the manufacturing method comprising:
a grinding working step effected to the movable member so as to form the loaded rolling member rolling surface by using a grinding stone; and
a surface treating step of effecting a peening treatment to an area including at least loaded rolling member rolling surface of the movable member to thereby render a defect caused on the loaded rolling member rolling surface in the grinding working harmless.

3. The method of manufacturing a motion guide device according to claim 1 or 2, wherein the loaded rolling member rolling surface is subjected to the peening treatment in the surface treating step so as to provide a surface roughness Ra of less than 0.4 µm.

4. The method of manufacturing a motion guide device according to any one of claims 1 to 3, wherein the peening treatment is a fine-grain peening treatment.

5. The method of manufacturing a motion guide device according to any one of claims 1 to 4, wherein the surface treating step includes a barrel treatment effected after the peening treatment.

6. A motion guide device comprising:
a track member provided with a rolling member rolling surface;
a movable member provided with a loaded rolling member rolling surface opposing to the rolling member rolling surface; and
a plurality of rolling members disposed to be freely rollable in a loaded rolling passage constituted by the rolling member rolling surface and the loaded rolling member rolling surface, in which the movable member is reciprocally movable or rotatable in an axial direction or circumferential direction of the track member,
wherein at least a portion of the rolling member rolling surface and the loaded rolling member rolling surface is subjected to the peening treatment in the surface treating step so as to provide a surface roughness Ra of less than 0.4 µm.
